# EUROPÄISCHE PATENTSCHRIFT

(11) **EP 4 109 130 B1**
(45) Veröffentlichungstag und Bekanntmachung des Hinweises auf die Patenterteilung: **16.04.2025**
(21) Anmeldenummer: 22180020.4
(22) Anmeldetag: 21.06.2022
(51) Int. Cl.: G01S 7/4861, G01S 7/4865, G01S 17/10, G01S 13/10, G01S 15/10

(54) **SENSOR UND VERFAHREN ZUR BESTIMMUNG EINER LAUFZEIT**
SENSOR AND METHOD FOR DETERMINING A RUNTIME
CAPTEUR ET PROCÉDÉ DE DÉTERMINATION D'UN TEMPS DE TRANSMISSION

(30) Priorität: 23.06.2021 DE 102021116241
(43) Veröffentlichungstag der Anmeldung: 28.12.2022
(73) Patentinhaber: SICK AG, 79183 Waldkirch (DE)
(72) Erfinder: Baldischweiler, Boris, 79194 Gundelfingen (DE)

(56) Entgegenhaltungen:
- EP-B1- 2 762 920
- US-A1- 2002 126 270

## Beschreibung

Die Erfindung betrifft einen Sensor und ein Verfahren zur Bestimmung einer Laufzeit, insbesondere einer Entfernung nach einem pulsbasierten Laufzeitverfahren, nach dem Oberbegriff von Anspruch 1 beziehungsweise 10.

Eine Entfernungsmessung nach dem Laufzeitprinzip ist für diverse Signale bekannt, etwa Mikrowellen, Licht oder Ultraschall. Speziell für optische Abstandsmessung gibt es viele Sensortypen, wie einstrahlige Entfernungsmesser, Laserscanner oder 3D-Kameras. Solche Sensoren können beispielsweise in der Fahrzeugsicherheit, der Logistik- oder Fabrikautomatisierung eingesetzt werden. Ein besonderes Anwendungsgebiet ist die Sicherheitstechnik, wo der Sensor die Umgebung einer Gefahrenquelle überwacht und bei Detektion eines unzulässigen Objekts eine Sicherungsmaßnahme einleitet, beispielsweise einen Notstopp.

Es gibt verschiedene Varianten der Laufzeitmessung. Bei einem Phasenverfahren wird das Sendesignal in seiner Amplitude moduliert und ein Phasenversatz des Empfangssignals ausgewertet. Bei einem Pulsverfahren wird ein Puls ausgesandt und die Zeit bis zum Empfang des von dem zu erfassenden Objekt reflektierten Pulses ausgewertet. Dieses Verfahren wird auch als direkte Laufzeitmessung bezeichnet (dToF, direct Time of Flight). Ein beispielsweise aus der EP 1 972 961 B1 bekanntes Pulsmittelungsverfahren sendet und empfängt wiederholt Pulse und wertet dies statistisch aus.

Die Zeit, die zwischen gesendetem und empfangenem Puls vergeht, muss sehr genau gemessen werden. Das ist eine anspruchsvolle Aufgabe und stellt sehr hohe Anforderungen an die Hardware. Soll die Auflösung der Entfernungsmessung eine Genauigkeit auch nur im Bereich einiger zehn Millimeter erreichen, so muss die Signallaufzeit schon in einer Größenordnung von hundert Pikosekunden genau bestimmt werden. Eine große Herausforderung ist eine entsprechend genaue Ermittlung des Empfangszeitpunkts. Die Abtastrate bei der Digitalisierung des Empfangspulses müsste für die genannten Zeitauflösungen mehrere zehn oder gar hundert GHz und mehr betragen.

Im Stand der Technik werden verschiedene Ansätze verfolgt, um diese hohe und feine Abtastung zu umgehen. Beispielsweise wird versucht, die Pulsform und insbesondere Pulsmitte nach einer lediglich 1-Bit-Wandlung aus Amplitude, Breite oder Energie des Pulses zu rekonstruieren. Das bedarf jedoch zusätzlicher Hardware, und die Pulsrekonstruktion muss aufwändig eingelernt werden. In einem sogenannten Constant Fraction Discriminator wird das Signal in einem zweiten Pfad verzögert und invertiert, und anschließend wird der Nullpunktdurchgang der Überlagerung beider Pfade interpoliert. Dafür muss aber die ursprüngliche Abtastung zumindest so schnell sein, dass der Puls überhaupt erfasst wird. Auch dann ist die Interpolation nur so genau, wie die Abtastung die Pulsamplituden mit nur wenigen oder gar einem einzigen Abtastpunkt erfassen konnte.

Die EP 2 762 920 B1 offenbart ein Verfahren zur Bestimmung der Signallaufzeit, bei dem rechnerisch eine Abtastung mit einer effektiven Auflösung rekonstruiert wird, die höher ist als diejenige der tatsächlichen Abtastung. Ergänzend wird vorgeschlagen, dass Eingangssignal vorab mit einem Filter zu dehnen und dessen Übertragungsfunktion in der Rekonstruktion einzubeziehen. Das Verfahren ist recht aufwändig und bedarf einer Modellierung des Eingangssignals.

Die US 7 834 795 B1 befasst sich mit einem Sensorarray mit komprimierter Erfassung (compressed sensing), um Hardware einzusparen und dennoch das Nyquist-Kriterium einzuhalten. Dies basiert aber auf einer mehrkanaligen Erfassung einer Vielzahl von Sensorsignalen, die bei einer Laufzeitmessung häufig nicht zur Verfügung stehen.

In der EP 2 189 805 B1 wird das Pulsmittelungsverfahren der oben genannten EP 1 972 961 B1 dadurch weiter verbessert, dass die wiederholten Sendepulse individuell gemäß einer vorgegebenen Verteilung verzögert werden. Dadurch wird effektiv empfangsseitig jeweils ein versetzter Punkt des Pulses abgetastet und so die Auflösung verfeinert. In einer Einzelmessung wäre das nicht umsetzbar, und es setzt eine nur langsam veränderliche Messumgebung voraus, bei der idealerweise während der gesamten Messung das gleiche Objekt am gleichen Ort erfasst wird.

Aus der EP 2 199 761 A1 ist bekannt, die Laufzeitmessung vielfach zu wiederholen und das Empfangssignal jeweils mit vergleichsweise grober Auflösung in gegenseitiger zeitlicher Verschiebung abzutasten. Die Überlagerung ergibt dann eine feinere Auflösung. Auch hier ist eine längere Messung unter gleichen Messbedingungen erforderlich, die in einer Füllstandmessung gemäß der EP 2 199 761 A1 gegeben sind, nicht jedoch in anderen Anwendungen einer Laufzeitmessung.

Ein weiterer bekannter Lösungsvorschlag besteht darin, das Empfangssignal auf mehrere Verzögerungskanäle zu vervielfältigen, die jeweils einen Zeitversatz eines anderen Bruchteils der Abtastfrequenz hinzufügen. Durch anschließende Kombination wird so die gemeinsame effektive Zeitauflösung entsprechend der Kanalzahl verbessert. Dies wird aber durch eine Parallelabtastung der Kanäle erkauft. Es genügt demnach zwar ein gegenüber der effektiven Abtastfrequenz langsamerer Analog-Digital-Wandler, der dafür aber mehrkanalfähig sein muss. Beispiele für dieses Vorgehen finden sich in der DE 10 2004 022 911 B4, der EP 1 59 6221 B1 oder der EP 2 088 453 B1.

Die US 2002/0126270 A1 offenbart einen Laserentfernungsdetektor, der die Laufzeit eines Pulses misst. Für eine Auflösungserhöhung werden vor der Abtastung verschiedene Verzögerungspfade durchlaufen. In einer Ausführungsform werden die Verzögerungsleitungen über ein N:1-Glied zusammengeführt.

Es ist daher Aufgabe der Erfindung, die Bestimmung einer Laufzeit weiter zu verbessem.

Diese Aufgabe wird durch einen Sensor und ein Verfahren zur Bestimmung einer Laufzeit nach Anspruch 1 beziehungsweise 10 gelöst. Es wird mit einem pulsbasierten Laufzeitverfahren (dToF, direct Time of Flight) gearbeitet, bei dem ein Signalpuls ausgesandt und wieder empfangen wird. Meist wird mit einem tastenden Prinzip gemessen, bei dem sich Sender und Empfänger am selben Ort befinden, also ein remittierter Puls empfangen wird. Es ist aber auch eine Laufzeitmessung bei räumlich getrenntem Sender und Empfänger denkbar, etwa zur Materialbestimmung. Der Signalpuls ist der Puls auf der Messstrecke, während Sendepuls und Empfangspuls zugehörige elektronische, interne Pulse sind, die den Signalpuls auslösen beziehungsweise daraus erzeugt werden. Ein Zeitversatz zwischen dem jeweiligen elektronischen Puls und dem Signalpuls kann durch Referenzmessung beziehungsweise Kalibration kompensiert werden.

Der Empfangspuls wird vor der eigentlichen Auswertung in einem Analog-Digital-Wandler digitalisiert. Dabei wird der Empfangspuls dem Analog-Digital-Wandler mehrfach mit jeweils unterschiedlicher Verzögerung zugeführt. Dies wird über mindestens einen Verzögerungspfad mit einem Verzögerungselement erreicht, das eine wohldefinierte Signalverzögerung (Delay) bewirkt, beispielsweise mit einer Verzögerungsleitung. Der Analog-Digital-Wandler liefert auf diese Weise eine erste Abtastung und mindestens eine zweite Abtastung in einem der Verzögerung eines Verzögerungspfads entsprechenden Zeitversatz. Mit Hilfe zusätzlicher Verzögerungspfade beziehungsweise durch eine andere Anzahl mehrfachen Durchlaufens eines Verzögerungspfades sind dritte, vierte und weitere Abtastungen mit anderem Zeitversatz möglich. Die Abtastungen unterscheiden sich voneinander in der Amplitude und/oder zeitlichen Lage.

Eine Steuer- und Auswertungseinheit bestimmt mittels der mindestens zwei Abtastungen die Laufzeit des Signalpulses, die wiederum über die Lichtgeschwindigkeit, bei einem tastenden Prinzip wegen des Hin- und Rückwegs des Signalpulses die halbe Lichtgeschwindigkeit, in eine Entfernung umgerechnet werden kann. Sofern der Signalpuls ein anderes Medium als Luft passiert, verändert sich die Lichtgeschwindigkeit entsprechend, und dieser Effekt kann umgekehrt zur Materialerkennung bei bekanntem Signalweg genutzt werden.

Die Erfindung geht von dem Grundgedanken aus, den Analog-Digital-Wandler seriell mehrfach zu nutzen, um den Empfangspuls wiederholt bei jeweils unterschiedlicher Amplitude und/oder zeitlicher Lage abzutasten und so zusätzliche Information über den Empfangspuls zu gewinnen. Das Umschaltelement leitet je nach seinem Zustand beziehungsweise Situation den Empfangspuls direkt weiter, d.h. über keinen Verzögerungspfad oder mit einer bestimmten Anzahl Schleifen wiederholt über einen gleichen Verzögerungspfad, so dass sich dessen Verzögerung entsprechend vervielfacht, oder optional über einen bestimmten Verzögerungspfad mit dessen jeweiliger Verzögerung. Es ist dabei nicht erheblich, ob eine Verzögerung Null in der direkten Weiterleitung als Verzögerung betrachtet wird oder nicht, zumal jede Leitung unvermeidlich eine gewisse Verzögerung impliziert. Es ist nämlich durch eine Kalibrierung beziehungsweise ein gemeinsames Zeitoffset immer möglich, einen beliebigen Nullpunkt als Bezug festzulegen.

Der Analog-Digital-Wandler wird demnach erfindungsgemäß in einer seriellen Mehrfachabtastung betrieben. Dafür reicht ein einkanaliger Analog-Digital-Wandler aus, ein mehrkanaliger Analog-Digital-Wandler für eine aus dem Stand der Technik bekannte Parallelabtastung ist nicht erforderlich. Es ist denkbar, mehrere Kanäle eines Analog-Digital-Wandlers gemäß der Erfindung zu betreiben, dann kombinieren sich die Effekte der Parallelabtastung und der Erfindung. Erfindungsgemäß wird das Empfangssignal nur lückenhaft abgetastet, nämlich im Bereich eines Empfangspulses. Dazwischen ergeben sich Messlücken, die für die serielle Mehrfachabtastung benötigt werden. In diesen Messlücken geschieht jedoch bei einer pulsbasierten Laufzeitmessung nichts von Interesse, bis nach der nächsten Messwiederholung oder beispielsweise im nächsten Winkelschritt eines Laserscanners ein nachfolgender Empfangspuls auszuwerten ist.

Die Erfindung hat den Vorteil, dass mit einfacher Hardware eine hohe Zeit- und/oder Amplitudenauflösung erreicht wird. Es genügt ein Analog-Digital-Wandler moderater Leistungsfähigkeit, der selbst nur eine vergleichsweise langsame originäre Abtastfrequenz und/oder Bitauflösung mitbringt. Dies wirkt sich vorteilhaft auf Kosten, Energieverbrauch und Abwärme aus. Messzeiten, in denen ohnehin kein relevantes Messereignis stattfindet, nämlich kein Empfangspuls registriert wird, werden vorteilhaft ausgenutzt, um die Messgenauigkeit zu erhöhen. Dadurch werden auch weniger Daten erzeugt, die zur eigentlichen Auswertung nicht erforderlich sind, womit die weitere Auswertung vereinfacht wird.

Die Steuer- und Auswertungseinheit ist bevorzugt dafür ausgebildet, den Empfangspuls mittels des Analog-Digital-Wandlers mehrmals nacheinander über eine Erfassungsdauer abzutasten, die mindestens eine Pulsdauer des Signalpulses beträgt. Die Pulsdauer des Signalpulses entspricht dem Zeitraum der relevanten Messinformation. Die Erfassungsdauer oder ein jeweiliges Abtastzeitfenster sollte vorzugsweise mindestens diese Pulsdauer umfassen oder noch bevorzugter gleich der Pulsdauer sein. Wenn zu erwarten ist, dass der Empfangspuls beispielsweise aufgrund von Filtern oder anderen Effekten in seiner Breite von derjenigen des Signalpulses abweicht, so kann die Erfassungsdauer entsprechend angepasst werden. Um seriell abtasten zu können, betragen die jeweiligen Verzögerungen zweier aufeinanderfolgender der wiederholten Abtastungen bevorzugt mindestens die Erfassungsdauer. Weitere nützliche Zeitdefinitionen betreffen die Messdauer zwischen zwei ausgesandten Sendepulsen, die insbesondere das Inverse einer Messwiederhol- oder Pulsrepetierfrequenz ist, sowie die Abtastperiode des Analog-Digital-Wandlers, d.h. das Inverse der Abtastfrequenz beispielsweise in der Größenordnung einiger hundert MHz oder einiger GHz.

Mindestens ein Verzögerungspfad verzögert bevorzugt den Empfangspuls um ein Vielfaches einer Abtastperiode des Analog-Digital-Wandlers. Das betrifft je nach Ausführungsform den einzigen Verzögerungspfad, einen oder einige von mehreren Verzögerungspfaden oder alle Verzögerungspfade. Vorzugsweise ist zusätzlich die Bedingung des Vorabsatzes gestellt, dass die Verzögerung größer gleich der Erfassungsdauer ist. Bei Verzögerung um ein Vielfaches der Abtastperiode liegt der abzutastende, verzögerte Empfangspuls sozusagen auf dem Zeit- oder Abtastgitter des Analog-Digital-Wandlers. Dadurch wird insbesondere der gleiche Punkt oder werden gleiche Punkte des Empfangspulses mehrfach abgetastet. Vorzugsweise erfolgt die serielle Mehrfachabtastung jeweils bei unterschiedlicher Amplitude. Das wird beispielsweise durch ein Dämpfungs- oder Verstärkungsglied in dem Verzögerungspfad erreicht, insbesondere in Doppelfunktion durch ein dämpfendes Verzögerungsglied, und/oder die Abtastschwelle beziehungsweise die Abtastschwellen des Analog-Digital-Wandlers werden bei den seriellen Wiederholungen der Abtastung verändert. Mit dieser Art der seriellen Mehrfachabtastung wird die Amplitudenauflösung oder Bittiefe des Analog-Digital-Wandlers effektiv erhöht.

Mindestens ein Verzögerungspfad verzögert bevorzugt den Empfangspuls um einen Bruchteil einer Abtastperiode des Analog-Digital-Wandlers. Wiederum betrifft das je nach Ausführungsform den einzigen Verzögerungspfad, einen oder einige von mehreren Verzögerungspfaden oder alle Verzögerungspfade, und es ist vorzugsweise zusätzlich die Bedingung gestellt, dass die Verzögerung größer gleich der Erfassungsdauer ist, indem für die jeweilige Verzögerung zu dem Bruchteil eine entsprechende Anzahl ganzer Abtastperioden hinzukommt. Bei Verzögerung um einen Bruchteil der Abtastperiode liegt nun der abzutastende, verzögerte Empfangspuls sozusagen zwischen dem Zeit- oder Abtastgitter des Analog-Digital-Wandlers. Es werden folglich mit der Wiederholung der Abtastung andere Punkte des Empfangspulses abgetastet, so dass sich die Zeitauflösung oder effektive Abtastrate bei kombinierter Auswertung der Abtastungen erhöht. Die Ausführungsformen des Vorabsatzes und dieses Absatzes können kombiniert werden. Dann erfolgt mindestens eine Abtastung bei Verzögerung um ein Vielfaches der Abtastperiode bei geänderter Amplitude und mindestens eine Abtastung bei Verzögerung um einen Bruchteil der Abtastperiode, und es wird sowohl die Amplituden- als auch die Zeitauflösung verbessert.

Das Umschaltelement ist bevorzugt als Multiplexeinheit zum Umschalten zwischen verschiedenen Verzögerungspfaden ausgebildet. Je nach Zustand der Multiplexeinheit wird somit der Empfangspuls von einem der Verzögerungspfade in dem Analog-Digital-Wandler digitalisiert, so dass die Verzögerungspfade nacheinander in einem Multiplexverfahren abgearbeitet werden können. Ein Zustand der Multiplexeinheit kann ausdrücklich die Durchleitung des Empfangspulses für eine direkte Abtastung ohne Verzögerung sein, der in diesem Zusammenhang als Verzögerungspfad mit Verzögerung Null verstanden werden kann. Vorzugsweise ist der Multiplexeinheit und dem mindestens einen Verzögerungspfad ein Splitter vorgeordnet, der das Empfangssignal des Empfängers auf den mindestens einen Verzögerungspfad beziehungsweise eine direkte Durchleitung vervielfältigt.

Der Verzögerungspfad bildet eine Schleife, die den verzögerten Empfangspuls erneut über das Umschaltelement in den Verzögerungspfad einspeist. In dieser Ausführungsform genügt vorzugsweise ein einziger Verzögerungspfad. Das Umschaltelement leitet den Empfangspuls zunächst direkt und anschließend ein- oder mehrfach nach ein- oder mehrfachem Durchlaufen der Schleife an den Analog-Digital-Wandler weiter. Die unterschiedlichen Verzögerungen entstehen durch die Anzahl durchlaufener Schleifen. Dabei ist eine Verzögerung denkbar, die einem Vielfachen der Abtastperiode entspricht, oder eine solche, die einem Bruchteil der Abtastperiode entspricht, weiterhin mit der oben schon genannten vorzugsweisen Zusatzbedingung, dass die Verzögerung mindestens so lang ist wie die Erfassungsdauer. Es ist daher eine Verbesserung der Amplitudenauflösung oder der Zeitauflösung erreichbar. Im erstgenannten Fall ist vorzugsweise eine Dämpfung oder Verstärkung in der Schleife vorgesehen, die sich mit der Schleifenzahl ebenso wie die Verzögerung kumuliert.

Zwischen Umschaltelement und Analog-Digital-Wandler ist bevorzugt ein Filterelement zum Verbreitern des Empfangspulses angeordnet, insbesondere ein Tiefpassfilter. Das Filterelement ist besonders bevorzugt in einer direkten Verbindung oder einem ersten Verzögerungspfad angeordnet oder dort zuschaltbar, so dass die erste Abtastung einen von dem Filterelement verbreiterten oder zeitgedehnten Empfangspuls abtastet. Das garantiert insbesondere, dass der Empfangspuls auch bei einer geringen Zeitauflösung des Analog-Digital-Wandlers überhaupt beziehungsweise mit einer höheren Anzahl Abtastpunkten erfasst wird. Dafür geht die Form des ursprünglichen Empfangspulses verloren, sofern sie nicht aus der Übertragungsfunktion des Filters zurückgerechnet wird. Durch die serielle Mehrfachabtastung können solche Informationen über den Empfangspuls dennoch erfasst werden.

Die Steuer- und Auswertungseinheit ist bevorzugt dafür ausgebildet, ein Ausgangssignal des Empfängers so lange unverzögert mit dem Analog-Digital-Wandler abzutasten, bis ein Empfangspuls erkannt ist, und das Umschaltelement nach einem Empfangspuls umzuschalten. Es gibt somit eine Art Ruhezustand, in dem das Ausgangssignal des Empfängers primär darauf überwacht wird, ob überhaupt ein Empfangspuls anliegt. Nur wenn das der Fall ist, erfolgt die serielle Mehrfachabtastung. Ein erfasster Empfangspuls kann mit anderen Worten als Auslöser der seriellen Mehrfachabtastung betrachtet werden.

Der Empfangspuls wird beispielsweise im digitalisierten Ausgangssignal anhand einer Rausch- oder Pulsschwelle erkannt. Das digitalisierte Ausgangssignal ohne Empfangspuls kann verworfen werden, da es keine relevante Messinformation trägt, außer für Zusatzfunktionen wie beispielsweise eine Messung des Umgebungslichts. Vorzugsweise wird das digitalisierte Ausgangssignal in einem rollierenden Speicher für eine Anzahl Abtastpunkte entsprechend der Erfassungsdauer abgelegt. Im Falle eines Empfangspulses ist dann dessen erste Abtastung für die weitere Auswertung nach der Komplettierung durch die serielle Mehrfachauswertung verfügbar, sofern die weiteren Abtastungen in einem anderen Speicherbereich abgelegt werden. In besonders bevorzugter Ausführungsform durchläuft das in dem Ruhezustand abgetastete Ausgangssignal das Filterelement des Vorabsatzes zur Verbreiterung eines etwaig vorhandenen Empfangspulses.

Die Steuer- und Auswertungseinheit ist bevorzugt dafür ausgebildet, die serielle Mehrfachabtastung fortzusetzen, bis ein nächster Empfangspuls erwartet wird oder erfasst ist. Dadurch wird die Messdauer möglichst vollständig genutzt. Es ist denkbar, eine Höchstdauer vorzugeben, weil es nicht unbedingt sinnvoll ist, eine längere Messdauer vollständig mit vielfachen wiederholten Abtastungen zu füllen. Der nächste Empfangspuls kann theoretisch erwartet sein, weil bekannt ist, wann dieser frühestens ankommen könnte, beispielsweise bei einer vorgegebenen Messdauer bis zu einer maximalen Laufzeit oder Reichweite oder einer vorgegebenen Pulsrepetierfrequenz. Insbesondere kann die Laufzeit schnell grob bestimmt werden, für ein nahes Objekt steht dann noch mehr Zeit zur Verfügung als für ein fernes Objekt. Statt einer theoretischen Erwartung kann ein neuer Empfangspuls registriert werden. Dann wird alternativ der frühere Empfangspuls weiter ausgewertet und der neue Empfangspuls ignoriert oder umgekehrt, beziehungsweise es kann versucht werden, mit den schon erfassten Abtastungen eine Laufzeit zu bestimmen.

Der Sensor ist bevorzugt als optoelektronischer Sensor ausgebildet, wobei der Sender ein Lichtsender, der Empfänger ein Lichtempfänger und der Signalpuls ein Lichtpuls ist. Die Entfernung wird somit optisch in einem Lichtlaufzeitverfahren gemessen. Ein solcher optoelektronischer Sensor lässt sich auch als entfernungsmessendes Modul verstehen, aus dem verschiedene Sensoren wie Lichttaster, Lichtgitter oder Laserscanner aufgebaut werden können. Alternativ zu einem optoelektronischen Sensor kann der Sensor als Radar-, TDR- und insbesondere Füllstand- oder Ultraschallsensor ausgebildet sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Sensors zur Entfernungsmessung mit einem Laufzeitverfahren;
- Fig. 2: ein beispielhafter Empfangspuls mit dem Ergebnis einer seriellen Mehrfachabtastung gemäß einer Ausführungsform der Erfindung;
- Fig. 3: eine schematische Darstellung einer Ausführungsform einer seriellen Mehrfachabtastung in mehreren Pfaden mittels Multiplexing;
- Fig. 4: eine schematische Darstellung ähnlich Figur 3 nun mit zusätzlichem Filter für einen ersten Kanal;
- Fig. 5: beispielhafte Signale und Abtastungen in verschiedenen Kanälen einer seriellen Mehrfachabtastung;
- Fig. 6: eine schematische Darstellung einer Ausführungsform einer seriellen Mehrfachabtastung in einer Schleife; und
- Fig. 7: eine schematische Darstellung ähnlich Figur 6 nun mit zusätzlichem Filter für einen ersten Kanal.

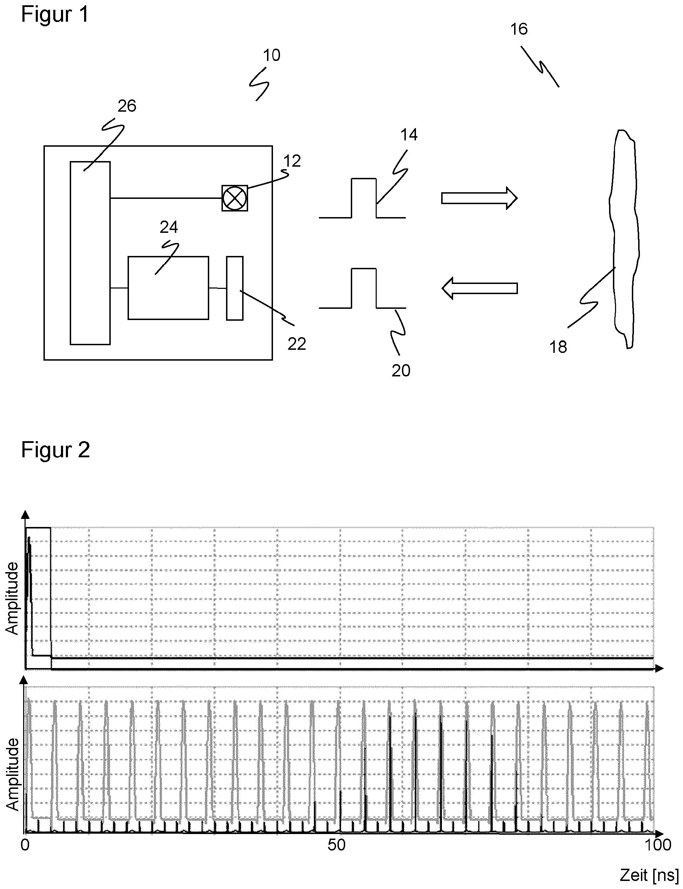

Figur 1 zeigt eine schematische Darstellung eines eine Lichtlaufzeit messenden Sensors 10 in einer Ausführungsform als eindimensionaler optoelektronischer Entfernungstaster. Ein Lichtsender 12, beispielsweise eine LED oder eine Laserlichtquelle, sendet einen Lichtpuls 14 in einen Überwachungsbereich 16 aus. Auslöser für den Lichtpuls 14 ist ein nicht gezeigter elektronischer Sendepuls. Trifft der Lichtpuls 14 auf ein Objekt 18, so wird ein Teil des Lichtpulses 14 remittiert oder reflektiert und kehrt als remittierter Lichtpuls 20 zu einem Lichtempfänger 22 zurück. Dort wird ein ebenfalls nicht gezeigter elektronischer Empfangspuls erzeugt. Der Sensor 10 weist in einer praktischen Ausführungsform weitere Elemente auf, insbesondere Sende- und Empfangsoptiken und Anschlüsse, auf die hier vereinfachend nicht eingegangen wird

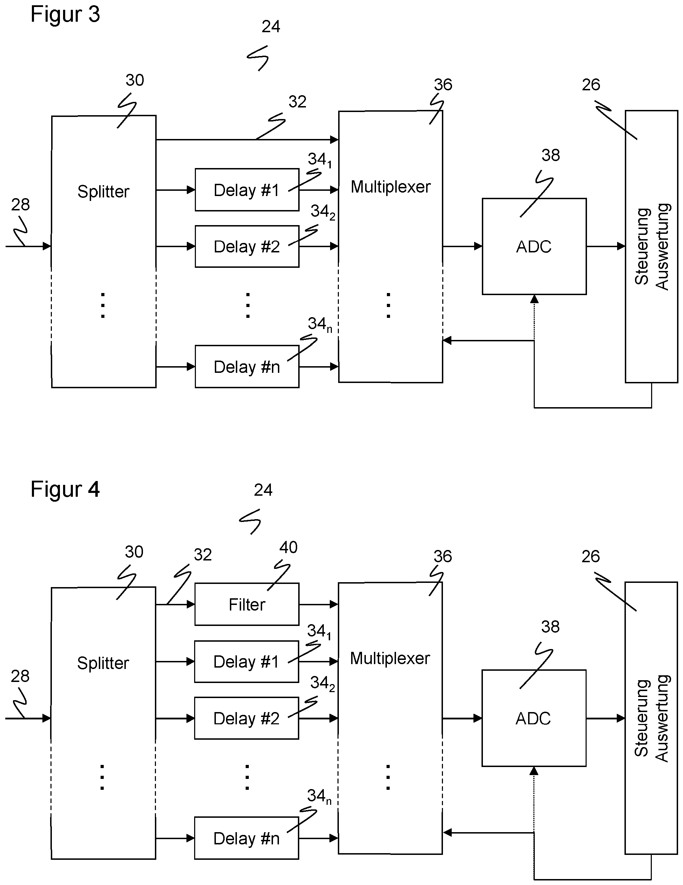

Der von dem Lichtempfänger 22 erzeugte Empfangspuls wird zunächst in einer seriellen Abtasteinheit 24 digitalisiert, die hier nur rein schematisch als Block gezeigt ist und die später unter Bezugnahme auf die Figuren 3 bis 7 genauer erläutert wird. Die mehrfachen seriellen Abtastungen des Empfangspulses werden einer Steuer- und Auswertungseinheit 26 zugeführt, beispielsweise einem Mikroprozessor oder mindestens einem sonstigen digitalen Verarbeitungsbaustein, die auch den Lichtsender 12 mit dem Sendepuls ansteuert und die gegebenenfalls für andere Sensorfunktionen zuständig sind. Aus den Informationen über den Empfangspuls bestimmt die Steuer- und Auswertungseinheit 26 die Laufzeit (ToF, Time of Flight) zwischen dem Sendepuls und dem Empfangspuls. Konstante Anteile der gemessenen Laufzeit durch interne Signallaufzeiten und dergleichen können durch eine Referenzmessung oder Kalibration, auch unter Berücksichtigung einer aktuellen Temperatur, kompensiert werden. Die eventuell entsprechend bereinigte Laufzeit entspricht der Entfernung des Objekts 18, wobei der Skalierungsfaktor die halbe Lichtgeschwindigkeit ist. Die Halbierung berücksichtigt den Hin- und Rückweg des Lichtpulses 14, 20.

Die Laufzeit kann in einem Einzelpulsverfahren oder mit einem Pulsmittelungsverfahren bestimmt werden, dass für sich beispielsweise aus der einleitend genannten EP 1 972 961 B1 bekannt ist. Dann wird nacheinander im Abstand einer Messdauer von beispielsweise 1µs eine Vielzahl Lichtpulse 14 ausgesandt, die Messinformation aus den entsprechenden Empfangspulsen akkumuliert und die Laufzeit durch statistische Auswertung bestimmt.

Der in Figur 1 gezeigte eindimensionale optoelektronische Entfernungstaster ist nur eine Ausführungsform eines erfindungsgemäßen Sensors 10. Beispielsweise kann der Sensor 10 koaxial aufgebaut sein, ein mehrdimensionales System sein, wie ein Laserscanner oder eine 3D-Lichtlaufzeitkamera, oder mit gänzlich anderen elektromagnetischen Signalen arbeiten, wie ein TDR-Füllstandsensor oder ein Radar. Im Prinzip sind auch nicht-elektromagnetische Signale wie Ultraschall vorstellbar, wobei dann statt der Lichtgeschwindigkeit die Schallgeschwindigkeit zugrunde zu legen ist und sich das Problem der extrem schnellen Zeitmessung dadurch relativiert.

Die Laufzeit kann umso genauer gemessen werden, je hochauflösender der Empfangspuls abgetastet wird. Es soll jedoch kein Höchstleistungs-Analog-Digital-Wandler eingesetzt werden, d.h. es wird vorzugsweise keine Abtastrate im höheren GHz-Bereich, keine hohe Amplitudenauflösung von vier, acht, sechzehn oder noch mehr Bit und keine Parallelfähigkeit zur simultanen Abtastung mehrerer (Teil)signale gefordert. Vielmehr wird der Empfangspuls erfindungsgemäß mittels der seriellen Abtasteinheit 24 mehrfach nacheinander bei unterschiedlichen Amplituden und/oder zeitlichen Lagen abgetastet, und die Information dieser mehreren Abtastungen wird in der Steuer- und Auswertungseinheit 26 kombiniert.

Figur 2 veranschaulicht dies vorab für den Fall einer verbesserten Zeitauflösung. Auf die genauere Entstehung der gezeigten Simulationsergebnisse wird am Ende dieser Beschreibung nochmals eingegangen. Die Motivation für eine serielle Mehrfachabtastung ist die Folgende: bei einer pulsbasierten Laufzeitmessung erfasst der Lichtempfänger 22 über den Großteil der Messdauer zwischen zwei gesendeten Lichtpulsen 14 nur Umgebungslicht. Das Empfangssystem bleibt solange effektiv ungenutzt. In der kurzen Zeitspanne, in der von dem Lichtempfänger 22 ein Empfangspuls erzeugt wird, soll hingegen so viel Information wie möglich erfasst werden. Deshalb wird erfindungsgemäß der Empfangspuls vervielfältigt und in den ungenutzten Zeiten wiederholt seriell abgetastet, je nach Ausführungsform bei verschiedenem Zeitversatz und/oder Amplituden. Anschließend werden die seriellen Abtastungen zusammengeführt.

Die Figur 2 illustriert dies für einen unterschiedlichen Zeitversatz. Im oberen Teil der Figur 2 ist der Empfangspuls mit einem nachfolgenden Teil der Messdauer ohne weiteren Empfangspuls gezeigt, überlagert mit einem Rechtecksignal, das die Abtastperiode veranschaulicht. Ohne serielle Mehrfachabtastung würde nur ein einziger Abtastpunkt für den Empfangspuls gewonnen, und selbst das nur bei günstiger Lage des Empfangspulses zu der Abtastperiode. Im unteren Teil der Figur 2 sind in grau verzögerte Wiederholungen des Empfangspulses und in schwarz daraus durch serielle Mehrfachabtastung gewonnene Abtastungen gezeigt. Der Empfangspuls ist damit effektiv mit einer Vielzahl von Abtastpunkten erfasst, der Einfluss der Dehnung auf den Empfangszeitpunkt beziehungsweise die Laufzeit kann von der Steuer- und Auswertungseinheit 26 in Kenntnis der Verzögerungen korrigiert werden.

Figur 3 zeigt eine schematische Darstellung einer Ausführungsform der seriellen Abtasteinheit 24. Die serielle Abtasteinheit 24 kann ganz oder teilweise als integrierte Schaltung ausgeführt sein, insbesondere zumindest teilweise gemeinsam mit der Steuer- und Auswertungseinheit 26. Eingangsseitig wird das analoge Empfangssignal 28 des Lichtempfängers 22 einem Splitter 30 zugeführt, wobei eine Vorverstärkung denkbar ist. Ein einfacher Splitter 30 teilt das Signal durch mehrere Leitungen des gleichen Widerstands, beispielsweise eine 50-Ohm-Leitung, die sich in zwei 100-Ohm-Leitungen verzweigt.

Durch ein Anpassnetzwerk sind gleiche Widerstände am Eingang und Ausgang möglich, insbesondere 50 Ohm. Eine Alternative ist ein aktiver Splitter 30.

Der Splitter 30 verzweigt auf mindestens zwei Kanäle. Einer dieser Kanäle ist bevorzugt eine direkte Verbindung 32, und es ist mindestens ein weiterer Kanal in Form eines Verzögerungspfades 34_{1..n} vorgesehen. Im Beispiel der Figur 3 sind es n Verzögerungspfade 34_{1..n} mit n unterschiedlichen Verzögerungen, insbesondere dem 1...n-fachen einer Basisverzögerung, wobei die Verzögerungen durch ein nicht gezeigtes Verzögerungselement erzeugt werden. Die benötigte Verzögerung lässt sich beispielsweise durch die Länge eines als Verzögerungsleitung ausgebildeten Verzögerungselements einstellen. Vorzugsweise ist eine solche Verzögerungsleitung in einer Leiterkarte der seriellen Abtasteinheit 24 ausgeführt. Es sind aber auch dezidierte Verzögerungsleitungen aus Keramik oder Kabel möglich. Die Begriffe Kanal und Verzögerungspfad werden im Folgenden manchmal austauschbar verwendet. Auch die direkte Verbindung 32 lässt sich in diesem Begriffsverständnis als Verzögerungspfad mit Verzögerung Null auffassen. In erfindungsgemäßen Ausführungsformen entstehen unterschiedliche Kanäle jedoch grundsätzlich durch das mehrfache Durchlaufen eines als Schleife ausgebildeten Verzögerungspfades.

In einer Multiplexeinheit 36 werden die Kanäle zusammengefasst, die Multiplexeinheit 36 schaltet wahlweise das Signal eines der Kanäle auf einen Analog-Digital-Wandler 38 durch. Die Bitauflösung des Analog-Digital-Wandlers 38 ist vorzugsweise klein, beispielsweise wird mit n=1, 2, 4 oder 8 Bit abgetastet. Auch die Abtastfrequenz ist vorzugsweise moderat und beträgt beispielsweise einige zehn oder hundert MHz oder einige GHz, wobei letzteres allein für eine feinaufgelöste Entfernungsmessung immer noch deutlich zu klein wäre. Dank der seriellen Abtastung muss der Analog-Digital-Wandler 38 jeweils nur ein Signal zur gleichen Zeit verarbeiten und kann deshalb einkanalig ausgeführt sein. Die Abtastungen werden an die Steuer- und Auswertungseinheit 26 ausgegeben, die vorzugsweise die Multiplexeinheit 36 ansteuern kann.

Im Messbetrieb des Sensors 10 wird das analoge Empfangssignal 28 von dem Splitter 30 in eine der Kanalzahl 32, 34_{1..n} entsprechende Anzahl Untersignale aufgesplittet. Zu Beginn einer Messung ist der erste Kanal 32 aktiv, d.h. die Multiplexeinheit 36 schaltet die direkte Verbindung 32 auf den Analog-Digital-Wandler 38 durch, der somit das unverzögerte Empfangssignal 28 abtastet. Erkennt die Steuer- und Auswertungseinheit 26 in dieser Abtastung einen Empfangspuls, so wird dieser zunächst für eine Erfassungsdauer weiter abgetastet. Dies kann durch Ablegen der bisherigen Abtastwerte in einen rollierenden Speicher mit einer Kapazität für Abtastwerte der Erfassungsdauer sozusagen auch in die Vergangenheit rückwirken. Damit werden Abtastwerte des Empfangspulses erfasst, in denen der Empfangspuls womöglich noch nicht als solcher erkannt war. Die Erfassungsdauer ist vorzugsweise so lang wie die erwartete Dauer des Empfangspulses oder etwas länger. Da die Breite des Empfangspulses von der Remission und dem Abstand des Objektes 18 abhängt, wird vorzugsweise eine an die Anwendung angepasste Wahl getroffen. Diese Abhängigkeiten bestehen im Übrigen auch für die Pulshöhe, die Steuer- und Auswertungseinheit 26 kann dies in ihrer Auswertung berücksichtigen.

Nach der Erfassungsdauer schaltet die Steuer- und Auswertungseinheit 26 die Multiplexeinheit 36 auf den nächsten Kanal um, in diesem Fall den ersten Verzögerungspfad 34₁. Der Empfangspuls wird dadurch ein weiteres Mal für die Erfassungsdauer mit der Verzögerung des ersten Verzögerungspfades 34₁ abgetastet. Durch weiteres Multiplexen wird dies analog für die weiteren Verzögerungspfade 34_{2..n} fortgesetzt. Der Empfangspuls wird damit n+1-mal nacheinander abgetastet. Anschließend kehrt das System in seinen Ruhezustand zurück, bei dem das unverzögerte Empfangssignal 28 aus dem ersten Kanal der direkten Verbindung 32 abgetastet wird, bis ein weiterer Empfangspuls erkannt wird, beispielsweise bei einer Messwiederholung oder in einem nächsten Winkelschritt eines Laserscanners.

Die zusätzliche Messinformation durch die serielle Mehrfachabtastung kann die Amplituden- und/oder Zeitauflösung der Abtastung des Empfangspulses verbessern.

Soll die Amplitudenauflösung oder Bitzahl des Analog-Digital-Wandlers 38 erhöht werden, so sind die Verzögerungen in den Verzögerungspfaden 34_{1..n} als Vielfaches der Abtastperiode und größer gleich der Erfassungsdauer gewählt. Die Verzögerungen liegen sozusagen auf dem zeitlichen Gitter der Abtastung des Analog-Digital-Wandlers 38. Dadurch wird der Empfangspuls in der seriellen Abtastung an jeweils gleichen Abtastpunkten mehrfach erfasst. Die wiederholten Abtastungen erfolgen bei unterschiedlicher Amplitude, so dass in den jeweiligen Abtastpunkten zusätzliche Messinformation über die Amplitude des Empfangspulses erfasst und somit effektiv in der Überlagerung der Abtastungen die Bitzahl erhöht wird.

Es gibt mehrere Möglichkeiten, diese unterschiedlichen Amplituden zu erreichen. In einer Ausführungsform verändert die Steuer- und Auswertungseinheit 26 beim Umschalten der Multiplexeinheit 36 auf einen neuen Kanal zugleich eine Abtastschwelle des Analog-Digital-Wandlers 38. Das hat den Vorteil, dass die unterschiedlichen Amplituden einstellbar sind. Alternativ ist in den Kanälen eine unterschiedliche Dämpfung oder Verstärkung vorgesehen. Dazu können zusätzliche Bauteile in den Verzögerungspfaden 34_{1..n} angeordnet werden, beispielsweise Widerstände oder Spannungsteiler, oder das Verzögerungselement selbst hat eine gezielte oder ohnehin vorhandene dämpfende Wirkung, die vorzugsweise mit der bewirkten Verzögerung korreliert. Eine weitere Möglichkeit ist, dass der Splitter 30 in Untersignale mit verschiedenen Amplituden aufsplittet.

Soll andererseits die Zeitauflösung erhöht, somit effektiv eine höhere Abtastfrequenz erreicht werden, wie dies am Beispiel der Figur 2 erläutert wurde, so weisen die Verzögerungen in den Verzögerungspfaden 34_{1..n} einen Bruchteil der Abtastperiode auf. Der Bruchteil oder das nicht ganzzahlige Vielfache der Abtastperiode verschiebt die Abtastpunkte sozusagen in Zwischenräume des zeitlichen Gitters der Abtastung des Analog-Digital-Wandlers 38. Die Verzögerung setzt sich aus einem Bruchteil kleiner eins und ganzen Abtastperioden zusammen, so dass sich insgesamt eine Verzögerung größer gleich der Erfassungsdauer ergibt. Mit jeder seriellen Abtastung werden damit die Abtastpunkte bezüglich des Empfangspulses anders versetzt. Der Bruchteil kann vorzugsweise der Quotient der Abtastperiode und der Kanalzahl sein, dann tasten die Kanäle nacheinander gleichmäßig die Abtastperiode aus. Der Bruchteil kann alternativ von einer Vielzahl ganzer Abtastperioden abgezogen werden, dann verschiebt sich die Abtastung über die Kanäle relativ zum Empfangspuls nach hinten statt nach vorne.

Die beiden Möglichkeiten sind miteinander kombinierbar. Einige der Verzögerungspfade 34_{1..n} sind dann wie beschrieben für eine höhere Amplitudenauflösung, andere für eine höhere Zeitauflösung ausgelegt.

Durch die serielle Abtastung ist das Empfangssystem nach einem Empfangspuls für n Erfassungsdauern für weitere Empfangspulse in dem Empfangssignal 28 nicht empfänglich. Das ist unproblematisch, solange in diesem Zeitraum keine relevante Information erwartet wird. Die Steuer- und Auswertungseinheit 26 kennt den Zeitpunkt, zu dem ein nächster Sendepuls erzeugt wird und erwartet vorher keinen weiteren Empfangspuls. Alternativ ist denkbar, dass die Steuer- und Auswertungseinheit 26 über die Multiplexeinheit 36 in regelmäßigen Abständen auf den ersten Kanal umschaltet und über die direkte Verbindung 32 das inzwischen anliegende aktuelle Empfangssignal 28 abtastet, um die Totzeit zu reduzieren. Als weitere Alternative kann für diese Überwachung ein zusätzlicher Messkanal geschaffen werden. Dadurch werden unerwartete weitere Empfangspulse beispielsweise im Falle von Mehrfachechos erkannt, wie an einer nahen Glasscheibe mit einem festen Objekt dahinter. Die Steuer- und Auswertungseinheit 26 kann dann je nach Anwendung, Konfiguration und Situation die Feinquantisierung des früheren Empfangspulses abbrechen und sich dem neuen Empfangspuls zuwenden oder die ursprüngliche Auswertung fortsetzen und den neuen Empfangspuls ignorieren. Aufteilungen zwischen altem und neuem Empfangspuls mit Auswertung der jeweiligen Teilinformation sind auch denkbar.

Es besteht weiterhin die Möglichkeit, die erfindungsgemäße serielle Abtastung mit einer parallelen Abtastung zu kombinieren, wie einleitend beschrieben. Beispielsweise kann ein zweikanaliger Analog-Digital-Wandler 38 die effektive Abtastfrequenz nochmals verdoppeln, wobei die zusätzliche Messinformation auf erhöhte Amplituden- oder Zeitauflösung verteilbar ist.

Figur 4 zeigt eine weitere Ausführungsform der seriellen Abtasteinheit 24. Im Unterschied zu der Ausführungsform gemäß Figur 3 ist nun im ersten Kanal, der direkten Verbindung 32, ein Filter 40 zum zeitlichen Dehnen des Empfangspulses angeordnet, insbesondere ein Tiefpassfilter. Das ermöglicht insbesondere auch solche Empfangspulse zu detektieren, die schmaler sind als eine Abtastperiode und die erst durch die Zeitdehnung des Filters 40 länger werden als die Abtastperiode. Das Filter 40 verändert die Pulsform. Dies könnte mit bekannten Techniken, wie einleitend diskutiert, in der Steuer- und Auswertungseinheit 26 rechnerisch kompensiert werden. Durch das Umschalten auf die folgenden Kanäle wird aber ohnehin die effektive Abtastrate erhöht, und die Pulsform des nicht gedehnten Empfangspulses kann erfasst werden.

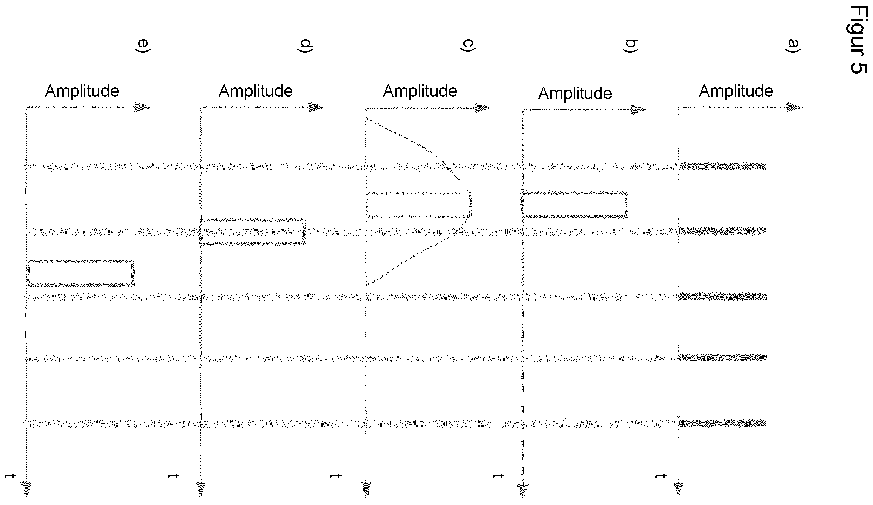

Figur 5 illustriert die Abtastung eines Empfangspulses in verschiedenen Kanälen für das Beispiel eines Empfangspulses, der schmaler ist als eine Abtastperiode und wofür somit die Ausführungsform gemäß Figur 4 besonders geeignet ist. Die Abtastfrequenz ist anders ausgedrückt so klein, dass der Empfangspuls in einigen Kanälen gar nicht und auch bestenfalls nur mit einem Abtastpunkt erfasst wird. Bei einer höheren Abtastfrequenz oder längeren Empfangspulsen würden schon in einem Kanal mehrere Abtastpunkte gewonnen. Ein längerer Empfangspuls ist jedoch nicht erwünscht, da dies die Auflösung der Laufzeitmessung beeinträchtigt, und die höhere Abtastfrequenz erfordert einen hochwertigeren und damit teureren Analog-Digital-Wandler 38.

Die Figur 5 zeigt von oben nach unten a) die Abtastzeitpunkte, b) das Empfangssignal 28, c) das Signal im ersten Kanal mit Zeitdehnung durch das Filter 40, d) das Signal im zweiten Kanal und e) das Signal im dritten Kanal. Bei der Darstellung wurden Verzögerungen um ganze Abtastperioden weggelassen, die seriellen Abtastungen sind also bereits passend übereinandergelegt. Wie in b) zu erkennen, ist die Abtastperiode in diesem Beispiel doppelt so lang wie die Pulsdauer. Zahlreiche Empfangspulse würden so gar nicht bemerkt. Das durch das Filter 40 gedehnte Signal im ersten Kanal gemäß c) wird jedoch zuverlässig erfasst. Die serielle Abtastung liefert nur im zweiten Kanal gemäß d) einen Abtastpunkt des nicht gedehnten Empfangspulses. Dennoch entspricht die kombinierte Information aus dem zweiten Kanal gemäß d) und dem dritten Kanal gemäß e) korrekt einer Abtastung mit doppelter Zeitauflösung gegenüber der originären Abtastfrequenz. Für mehr Abtastpunkte je Empfangspuls können zusätzliche Kanäle und damit serielle Abtastungen hinzugenommen werden.

In einem Zahlenbeispiel wird angenommen, dass der Empfangspuls 100 ps breit ist. Als beispielhafte Anwendung zur Veranschaulichung soll lediglich detektiert werden, ob ein Empfangspuls anliegt. Dafür genügt als Analog-Digital-Wandler 38 ein 1-Bit-Wandler oder Komparator. Dieser muss lediglich mit 5 GHz statt mit 10 GHz entsprechend den 100 ps abtasten. Das Filter 40 verbreitert den Empfangspuls auf mindestens 200 ps. Geeignete Verzögerungen im zweiten und dritten Kanal sind demnach 300 ps und 600 ps.

Bei Hinzunahme zweier weiterer Kanäle wird die effektive Abtastperiode nochmals halbiert, so dass nun eine Abtastfrequenz von 2,5 GHz ausreicht. Das Filter 40 sollte dementsprechend auf 400 ps verbreitern, die Verzögerungen werden Vielfache von 450 ps. Das bedeutet für den vierten oder letzten Kanal eine Verzögerung um 1,8 ns. Mit Leiterkartenmaterial FR4 bei εᵣ=4 entspricht dies einer Länge einer Verzögerungsleitung von 27 cm und wäre noch gut beispielsweise als Mäander realisierbar. Mit nochmals sechs weiteren Kanälen ist eine Reduktion der Abtastfrequenz auf 1 GHz möglich. Das Filter 40 verbreitert dann auf 1 ns, die einzelne Verzögerung beträgt 1,1 ns oder 16 cm in FR4. Für Vielfache dieser Verzögerung in den späteren Kanälen wären bereits lange Verzögerungsleitungen erforderlich, insbesondere konzentrische Verzögerungsleitungen. Daher ist eine zu hohe Anzahl Kanäle, beispielsweise mehr als vier, nicht mehr unbedingt vorteilhaft, weil die Verzögerungselemente groß werden. Bei Kombination mit einer Parallelabtastung liegt diese Schranke höher. Beispielsweise kann ein zweikanaliger Komparator die benötigte Abtastfrequenz nochmals halbieren.

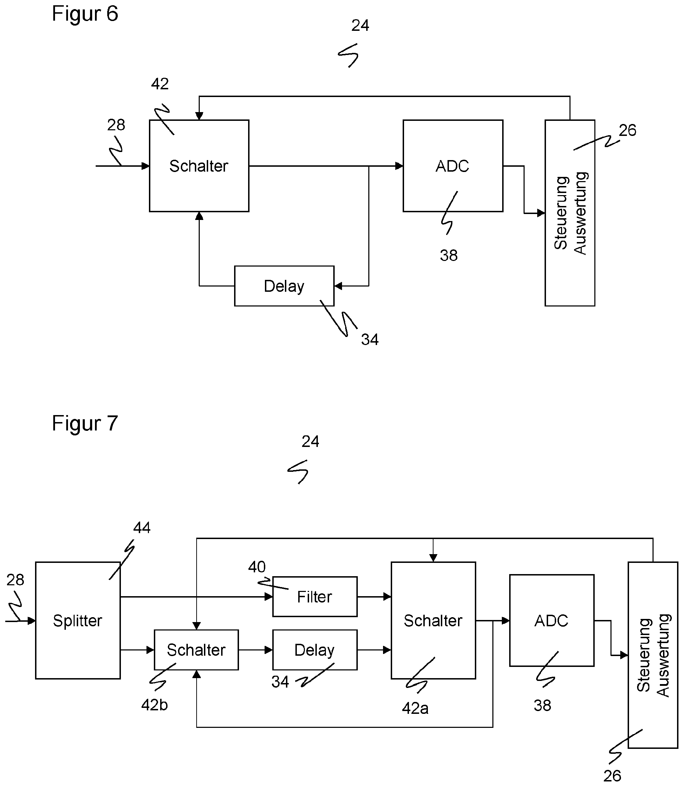

Figur 6 zeigt eine Ausführungsform der seriellen Abtasteinheit 24 mit Mehrfachnutzung eines Verzögerungspfades 34 in einer Schleife. Damit lässt sich unter anderem das Problem umgehen, dass größere Verzögerungen nur mit langen Verzögerungsleitungen möglich sind. In dieser Ausführungsform werden kein Splitter 30 und keine Multiplexeinheit 36 benötigt. Das Empfangssignal 28 wird über einen Schalter 42 eingespeist, der es in einem Anfangs- oder Ruhezustand zu dem Analog-Digital-Wandler 38 durchleitet. Gleichzeitig wird das Empfangssignal 28 in einer Schleife über den Verzögerungspfad 34 zu dem Schalter 42 zurückgeführt.

Nun ist der Schalter 42 so ausgelegt, dass er im Ruhezustand, während das Empfangssignal 28 durchgeleitet wird, den Verzögerungspfad 34 mit seinem Innenwiderstand gegen Masse schaltet. Wird ein Empfangspuls detektiert, so wird der Schalter 42 umgeschaltet, so dass der in der Schleife mit dem Verzögerungspfad 34 verzögerte Empfangspuls ein weiteres Mal sowohl dem Analog-Digital-Wandler 38 als auch der Schleife mit dem Verzögerungspfad 34 zugeführt wird. Die Kanäle der seriellen Mehrfachabtastung werden durch die Anzahl gebildet, wie oft die Schleife mit dem Verzögerungspfad 34 durchlaufen wird.

Theoretisch ist eine beliebige Anzahl von Durchläufen und damit Kanälen denkbar, jedenfalls soweit Zeit bis zum nächsten Empfangspuls zur Verfügung steht. Praktisch wird es aber zu Verlusten kommen, so dass der Empfangspuls mit jedem Durchlauf schwächer wird und dies die Anzahl limitiert. Der Dämpfungseffekt könnte durch ein die Verluste ausgleichendes Verstärkungselement in der Schleife verhindert werden. Ein Analog-Digital-Wandler 38 mit hochohmigem Abgriff reduziert die Verluste auf diejenigen des Verzögerungspfades 34 und des Schalters 42. Hochohmigkeit kann auch durch einen geeigneten Vorverstärker vor dem Analog-Digital-Wandler 38 realisiert werden.

Sofern eine Verbesserung der Amplitudenauflösung angestrebt ist, kann umgekehrt die Dämpfung vorteilhaft genutzt werden, um mit unterschiedlichen Amplituden abzutasten. Um beispielsweise mit einer einfachen Komparatorschwelle eine 2-Bit-Wandlung mit vier Stufen zu erreichen, könnten drei Durchläufe der Schleife plus der erste Kanal der direkten Durchleitung genutzt werden. Wird der Empfangspuls jeweils auf rein beispielhaft 90% geschwächt, so wird im ersten Kanal (direkte Verbindung) bei einer Amplitude von 100%, im zweiten Kanal (erster Durchlauf durch die Schleife) bei 90%, im dritten Kanal (zweiter Durchlauf durch die Schleife) bei 0,9²=81% und im vierten Kanal bei 0,9³=73% abgetastet.

Figur 7 zeigt eine weitere Ausführungsform der seriellen Abtasteinheit 24, die der Ausführungsform gemäß Figur 6 ein Filter 40 zur Zeitdehnung im ersten Kanal hinzufügt. Ein Splitter 44, der zur Unterscheidung von demjenigen gemäß Figur 3 und 4 ein neues Bezugszeichen erhält, aber in gleicher Weise aufgebaut sein kann, teilt das Empfangssignal 28 in zwei Teilsignale. Das erste Teilsignal erreicht über das Filter 40 und einen Schalter 42a in einem ersten Kanal den Analog-Digital-Wandler 38. Das zweite Teilsignal speist über einen weiteren Schalter 42b die Schleife mit dem Verzögerungspfad 34, der ebenfalls auf den Schalter 42a geführt ist. Im Ruhezustand leitet der Schalter 42a das zeitgedehnte Empfangssignal 28 des ersten Kanals auf den Analog-Digital-Wandler 38 durch. Wird dann im ersten Kanal ein zeitgedehnter Empfangspuls erkannt, so werden die Schalter 42a-b umgeschaltet. Analog zu den Erläuterungen zu der Ausführungsform gemäß Figur 6 werden nun die weiteren Kanäle abgetastet, indem die Schleife mit dem Verzögerungspfad 34 den Empfangspuls mit wählbarer Anzahl Durchläufen wiederholt dem Analog-Digital-Wandler 38 zuführt.

In allen Ausführungsformen können die Verzögerungspfade so realisiert sein, dass die Verzögerungen einstellbar sind, um ein größeres Anwendungsfeld abdecken zu können. Damit kann in Abhängigkeit von der Zeit, in der kein weiterer Empfangspuls erwartet wird, eine serielle Abtastung in mehr oder weniger Kanälen stattfinden, insbesondere die Schleife in den Ausführungsformen gemäß Figur 6 oder 7 öfter oder weniger oft durchlaufen werden. Bei einem Entfernungsmesssystem mit regelmäßigen Messzyklen beispielsweise steht bei Erfassung eines nahen Objekts 18 mehr Zeit zur Verfügung als bei einem fernen Objekt 18, ehe der nächste Empfangspuls einläuft. Folglich kann für ein nahes Objekt 18 das Echosignal hochauflösender abgetastet und damit die Entfernung präziser bestimmt werden. Auch eine Trennung von dahinter gelegenen Objekten ist somit präziser möglich, wie beispielsweise bei einem Bein vor einem spiegelnden Objekt oder einer sonstigen Mehrechoauswertung.

Nach den Erläuterungen zur Ausgestaltung der seriellen Abtasteinheit 24 ist nun die Figur 2 noch besser verständlich. Hier wurde mit einem System gemäß Figur 6 simuliert. Der Empfangspuls ist ein 1 ns breiter Sinuspuls, der mit 500 MHz abgetastet wird. Nach 4 ns wird der Schalter 42 umgeschaltet. Die gesamte Verzögerung der Schleife beträgt 4,1 ns. Damit wird das Eingangssignal im Verhältnis zur Abtastrate mit jedem Durchlauf um 100 ps verzögert und angefügt und somit quasi der Empfangspuls von hinten her in 100 ps-Schritten abgetastet.

## Patentansprüche

1. Sensor (10) zur Bestimmung einer Laufzeit, insbesondere einer Entfernung nach einem pulsbasierten Laufzeitverfahren, der einen Sender (12) zum Aussenden eines durch einen Sendepuls ausgelösten Signalpulses (14), einen Empfänger (22) zum Erzeugen eines Empfangspulses aus dem wieder empfangenen Signalpuls (20), einen Analog-Digital-Wandler (38) zum Digitalisieren des Empfangspulses, mindestens einen Verzögerungspfad (34) mit einem Verzögerungselement, um den Empfangspuls dem Analog-Digital-Wandler (38) mindestens zweifach mit jeweils unterschiedlicher Verzögerungszeit zuzuführen und eine erste Abtastung und mindestens eine zweite Abtastung des Empfangspulses und somit eine Mehrfachabtastung des Empfangspulses bei unterschiedlicher Amplitude und/oder zeitlicher Lage zu erzeugen, sowie eine Steuer- und Auswertungseinheit (26) aufweist, die dafür ausgebildet ist, mittels der ersten Abtastung und der zweiten Abtastung eine Laufzeit zu bestimmen, **dadurch gekennzeichnet, dass** zwischen dem Empfänger (22) und dem Analog-Digital-Wandler (38) ein Umschaltelement (36, 42) angeordnet ist, das den Empfangspuls wahlweise nicht über einen Verzögerungspfad (32), und unterschiedlich oft über den mindestens einen Verzögerungspfad (34) und optional über unterschiedliche Verzögerungspfade (34_{1..n}) leitet und so dem Analog-Digital-Wandler (38) den Empfangspuls für eine serielle Mehrfachabtastung nacheinander mit unterschiedlichen Verzögerungen zuführt, wobei der mindestens eine Verzögerungspfad (34) eine Schleife bildet, die den verzögerten Empfangspuls erneut über das Umschaltelement (42) in den mindestens einen Verzögerungspfad (34) einspeist.

2. Sensor (10) nach Anspruch 1,
wobei die Steuer- und Auswertungseinheit (26) dafür ausgebildet ist, den Empfangspuls mittels des Analog-Digital-Wandlers (38) mehrmals nacheinander über eine Erfassungsdauer abzutasten, die mindestens eine Pulsdauer des Signalpulses beträgt.

3. Sensor (10) nach Anspruch 1 oder 2,
wobei mindestens ein Verzögerungspfad (34) den Empfangspuls um ein Vielfaches einer Abtastperiode des Analog-Digital-Wandlers (38) verzögert.

4. Sensor (10) nach einem der vorhergehenden Ansprüche,
wobei mindestens ein Verzögerungspfad (34) den Empfangspuls um einen Bruchteil einer Abtastperiode des Analog-Digital-Wandlers (38) verzögert.

5. Sensor (10) nach einem der vorhergehenden Ansprüche,
wobei das Umschaltelement als Multiplexeinheit (36) zum Umschalten zwischen verschiedenen Verzögerungspfaden (34_{1..n}) ausgebildet ist.

6. Sensor (10) nach einem der vorhergehenden Ansprüche,
wobei zwischen Umschaltelement (36, 42) und Analog-Digital-Wandler (38) ein Filterelement (40) zum Verbreitern des Empfangspulses, insbesondere ein Tiefpassfilter angeordnet ist.

7. Sensor (10) nach einem der vorhergehenden Ansprüche,
wobei die Steuer- und Auswertungseinheit (26) dafür ausgebildet ist, ein Ausgangssignal des Empfängers (22) so lange unverzögert (32) mit dem Analog-Digital-Wandler (38) abzutasten, bis ein Empfangspuls erkannt ist, und das Umschaltelement (36, 42) nach einem Empfangspuls umzuschalten.

8. Sensor (10) nach einem der vorhergehenden Ansprüche,
wobei die Steuer- und Auswertungseinheit (26) dafür ausgebildet ist, die serielle Mehrfachabtastung fortzusetzen, bis ein nächster Empfangspuls erwartet wird oder erfasst ist.

9. Sensor (10) nach einem der vorhergehenden Ansprüche,
der als optoelektronischer Sensor ausgebildet ist, wobei der Sender (12) ein Lichtsender, der Empfänger (22) ein Lichtempfänger und der Signalpuls (14, 20) ein Lichtpuls ist.

10. Verfahren zur Bestimmung einer Laufzeit, insbesondere einer Entfernung nach einem pulsbasierten Laufzeitverfahren, bei dem ausgelöst durch einen Sendepuls ein Signalpuls (14) ausgesandt und aus dem wieder empfangenen Signalpuls (20) ein Empfangspuls erzeugt wird, wobei der Empfangspuls mittels mindestens eines Verzögerungspfades (34) mit einem Verzögerungselement mit jeweils unterschiedlicher Verzögerungszeit einem Analog-Digital-Wandler (38) zur Digitalisierung zugeführt wird, um eine erste Abtastung und mindestens eine zweite Abtastung des Empfangspulses und somit eine Mehrfachabtastung des Empfangspulses bei unterschiedlicher Amplitude und/oder zeitlicher Lage zu erzeugen, und wobei mittels der ersten Abtastung und der zweiten Abtastung eine Laufzeit bestimmt wird, **dadurch gekennzeichnet, dass** der Empfangspuls mittels eines Umschaltelements (36, 42) wahlweise nicht über einen Verzögerungspfad (32) und unterschiedlich oft über den mindestens einen Verzögerungspfad (34) und optional über unterschiedliche Verzögerungspfade (34_{1..n}) geleitet wird und so der Analog-Digital-Wandler (38) den jeweils unterschiedlich verzögerten Empfangspuls in einer seriellen Mehrfachabtastung mehrfach nacheinander abtastet, wobei der mindestens eine Verzögerungspfad (34) eine Schleife bildet, die den verzögerten Empfangspuls erneut über das Umschaltelement (42) in den mindestens einen Verzögerungspfad (34) einspeist.

## Claims

1. A sensor (10) for determining a time of flight, in particular of a distance in accordance with a pulse-based time of flight process, that has a transmitter (12) for transmitting a signal pulse (14) triggered by a transmitted pulse (14), a receiver (22) for generating a received pulse from the signal pulse (20) received again, an analog to digital converter (38) for digitizing the received pulse, at least one delay path (34) having a delay element to supply the received pulse to the analog to digital converter (38) at least twice with a respectively different delay time and to generate a first scan and at least one second scan of the received pulse and thus a multiple scan of the received pulse at different amplitudes and/or temporal positions, and having a control and evaluation unit (26) that is configured to determine a time of flight by means of the first scan and the second scan,
**characterized in that**
a switchover element (36, 42) is arranged between the receiver (22) and the analog to digital converter (38) that selectively does not conduct the received pulse over a delay path (32) and differently frequently over the at least one delay path (34), and optionally over different delay paths (34 1..n) and thus supplies the received pulse to the analog to digital converter (38) for a serial multiple scan sequentially with different delays, wherein at least one delay path (34) forms a loop that feeds the delayed received pulse into the at least one delay path (34) again via the switchover element (42).

2. A sensor (10) in accordance with claim 1,
wherein the control and evaluation unit (26) is configured to scan the received pulse by means of the analog to digital converter (38) multiple times sequentially over a detection period that amounts to at least a pulse duration of the signal pulse.

3. A sensor (10) in accordance with claim 1 or claim 2,
wherein at least one delay path (34) delays the received pulse by a multiple of a scan period of the analog to digital converter (38).

4. A sensor (10) in accordance with any one of the preceding claims,
wherein at least one delay path (34) delays the received pulse by a fraction of a scan period of the analog to digital converter (38).

5. A sensor (10) in accordance with any one of the preceding claims,
wherein the switchover element is configured as a multiplex unit (36) for switching between different delay paths (34_{1..n}).

6. A sensor (10) in accordance with any one of the preceding claims,
wherein a filter element (40) is arranged between the switchover element (36, 42) and the analog to digital converter (38) to widen the received pulse, in particular a low pass filter.

7. A sensor (10) in accordance with any one of the preceding claims,
wherein the control and evaluation unit (26) is configured to scan an output signal of the receiver (22) with the analog to digital converter (38) for so long without delay (32) until a received pulse has been recognized and to switch over the switchover element (36, 42) after a received pulse.

8. A sensor (10) in accordance with any one of the preceding claims,
wherein the control and evaluation unit (26) is configured to continue the serial multiple scan until a next received pulse is expected or is detected.

9. A sensor (10) in accordance with any one of the preceding claims,
that is configured as an optoelectronic sensor, wherein the transmitter (12) is a light transmitter, the receiver (22) is a light receiver, and the signal pulse (14, 20) is a light pulse.

10. A method of determining a time of flight, in particular a distance, in accordance with a pulse-based time of flight process, in which a signal pulse (14) triggered by a transmitted pulse is transmitted and a received pulse is generated form the signal pulse (20) received again, wherein the received pulse is supplied for digitizing to an analog to digital converter (38) by means of at least one delay path (34) having a delay element having a respectively different delay path to generate a first scan and at least one second scan of the received pulse and thus a multiple scan of the received pulse at different amplitudes and/or temporal locations; and wherein a time of flight is determined by means of the first scan and the second scan, **characterized in that**
the received pulse is selectively not conducted over a delay path (32) and differently frequently over the at least one delay path (34) and optionally over different delay paths ((34_{1..n}) by means of a switchover element (36, 42) and the analog to digital converter (38) thus scans the respectively differently delayed received pulse multiple times sequentially in a serial multiple scan, wherein at least one delay path (34) forms a loop that feeds the delayed received pulse into the at least one delay path (34) again via the switchover element (42).

## Revendications

1. Capteur (10) pour déterminer un temps de parcours, en particulier une distance, par un procédé de temps de parcours basé sur des impulsions, comprenant un émetteur (12) pour émettre une impulsion de signal (14) déclenchée par une impulsion d'émission, un récepteur (22) pour générer une impulsion de réception à partir de l'impulsion de signal (20) reçue, un convertisseur analogique-numérique (38) pour numériser l'impulsion de réception, au moins un trajet de retard (34) ayant un élément de retard pour amener l'impulsion de réception au convertisseur analogique-numérique (38) au moins deux fois avec des temps de retard respectivement différents et pour engendrer un premier échantillonnage et au moins un deuxième échantillonnage de l'impulsion de réception et donc un échantillonnage multiple de l'impulsion de réception avec une amplitude et/ou une position temporelle différentes, ainsi qu'une unité de commande et d'évaluation (26) conçue pour déterminer un temps de parcours au moyen du premier échantillonnage et du deuxième échantillonnage,
**caractérisé en ce que**
un élément de commutation (36, 42) est disposé entre le récepteur (22) et le convertisseur analogique-numérique (38), lequel, au choix, ne fait pas passer l'impulsion de réception par un trajet de retard (32), la fait passer plus ou moins souvent par ledit au moins un trajet de retard (34) et, optionnellement, la fait passer par différents trajets de retard (34_{1..n}), et qui amène donc l'impulsion de réception au convertisseur analogique-numérique (38) successivement avec des retards différents pour un échantillonnage multiple en série,
sachant que ledit au moins un trajet de retard (34) forme une boucle qui injecte à nouveau l'impulsion de réception retardée dans ledit au moins un trajet de retard (34) par l'intermédiaire de l'élément de commutation (42).

2. Capteur (10) selon la revendication 1,
dans lequel l'unité de commande et d'évaluation (26) est conçue pour échantillonner l'impulsion de réception au moyen du convertisseur analogique-numérique (38) plusieurs fois de suite pendant une durée de saisie qui est au moins égale à une durée d'impulsion de l'impulsion de signal.

3. Capteur (10) selon la revendication 1 ou 2,
dans lequel au moins un trajet de retard (34) retarde l'impulsion de réception d'un multiple d'une période d'échantillonnage du convertisseur analogique-numérique (38).

4. Capteur (10) selon l'une des revendications précédentes,
dans lequel au moins un trajet de retard (34) retarde l'impulsion de réception d'une fraction d'une période d'échantillonnage du convertisseur analogique-numérique (38).

5. Capteur (10) selon l'une des revendications précédentes,
dans lequel l'élément de commutation est conçu comme une unité de multiplexage (36) pour commuter entre différents trajets de retard (34_{1..n}).

6. Capteur (10) selon l'une des revendications précédentes,
dans lequel un élément filtrant (40) destiné à élargir l'impulsion de réception, en particulier un filtre passe-bas, est disposé entre l'élément de commutation (36, 42) et le convertisseur analogique-numérique (38).

7. Capteur (10) selon l'une des revendications précédentes,
dans lequel l'unité de commande et d'évaluation (26) est conçue pour échantillonner sans retard (32) un signal de sortie du récepteur (22) avec le convertisseur analogique-numérique (38) jusqu'à ce qu'une impulsion de réception soit saisie, et pour commuter l'élément de commutation (36, 42) après une impulsion de réception.

8. Capteur (10) selon l'une des revendications précédentes,
dans lequel l'unité de commande et d'évaluation (26) est conçue pour poursuivre l'échantillonnage multiple en série jusqu'à ce qu'une impulsion de réception suivante soit attendue ou saisie.

9. Capteur (10) selon l'une des revendications précédentes,
qui est conçu comme un capteur optoélectronique, l'émetteur (12) étant un émetteur de lumière, le récepteur (22) étant un récepteur de lumière et l'impulsion de signal (14, 20) étant une impulsion lumineuse.

10. Procédé pour déterminer un temps de parcours, en particulier une distance, par un procédé de temps de parcours basé sur des impulsions,
dans lequel
une impulsion de signal (14) est émise en étant déclenchée par une impulsion d'émission, et une impulsion de réception est générée à partir de l'impulsion de signal (20) reçue, l'impulsion de réception est amenée à un convertisseur analogique-numérique (38) de numérisation avec des temps de retard respectivement différents au moyen d'au moins un trajet de retard (34) ayant un élément de retard, afin d'engendrer un premier échantillonnage et au moins un deuxième échantillonnage de l'impulsion de réception et donc un échantillonnage multiple de l'impulsion de réception avec une amplitude et/ou une position temporelle différentes, et
un temps de parcours est déterminé au moyen du premier échantillonnage et du deuxième échantillonnage,
**caractérisé en ce que**
au moyen d'un élément de commutation (36, 42), l'impulsion de réception est acheminée, au choix, sans passer par un trajet de retard (32), en passant plus ou moins souvent par ledit au moins un trajet de retard (34), et, optionnellement, en passant par différents trajets de retard (34_{1..n}), et le convertisseur analogique-numérique (38) échantillonne donc plusieurs fois successivement l'impulsion de réception, retardée respectivement différemment, lors d'un échantillonnage multiple en série,
ledit au moins un trajet de retard (34) forme une boucle qui injecte à nouveau l'impulsion de réception retardée dans ledit au moins trajet de retard (34) par l'intermédiaire de l'élément de commutation (42).
